# EUROPEAN PATENT SPECIFICATION

(11) **EP 3 127 822 B1**
(45) Date of publication and mention of the grant of the patent: **28.12.2022**
(21) Application number: 15773071.4
(22) Date of filing: 02.04.2015
(51) Int. Cl.: B64G 1/56, B64G 1/24, B64G 1/26, B64G 1/64

(54) **DEBRIS REMOVAL DEVICE AND DEBRIS REMOVAL SYSTEM**
SCHMUTZBESEITIGUNGSVORRICHTUNG UND SCHMUTZBESEITIGUNGSSYSTEM
DISPOSITIF D'ÉLIMINATION DE DÉBRIS ET SYSTÈME D'ÉLIMINATION DE DÉBRIS

(30) Priority: 04.04.2014 JP 2014077824
(43) Date of publication of application: 08.02.2017
(73) Proprietor: Astroscale Japan Inc., Tokyo 130-0013 (JP)
(72) Inventor: OKADA, Mitsunobu, Singapore 049909 (SG)
(74) Representative: Plasseraud IP
(86) International application number: PCT/JP2015/060484
(87) International publication number: WO 2015/152376

(56) References cited:
- WO-A1-2013/011073
- DE-U1-202014 005 333
- JP-A- H08 505 828
- JP-A- H09 511 472
- JP-A- 2012 236 591
- US-A- 5 082 211
- US-A- 5 082 211
- US-A- 5 806 802
- US-A1- 2012 076 629
- US-A1- 2012 286 100

## Description

### Technical Field

The present invention relates to a debris removal device and a debris removal system.

### Background Art

Currently is known that satellites launched in the past and completed its mission or broken, their fragments and wrecks such as an upper stage of a rocket are existing as space debris in circling orbits above the earth. Such space debris may collide with space stations or satellites performing their missions correctly and may be the harmful risk for them, and therefore various techniques have been proposed for letting such space debris leave from the orbit for burning or collecting.

For instance, a technique is proposed, in which minute space debris is negatively charged through plasma environment in the space, and the altitude of the debris is decreased by the force of electrical field that acts to decelerate the debris so as to let the debris enter the atmosphere for burning and removal (see Patent Document 1). Recently another technique is proposed, in which a device for removing space debris is configured by covering a foam material with a jacket including a plurality of fabric layers (see Patent Document 2). According to this technique, space debris is made to collide with the jacket and is broken into a plurality of pieces. Then these pieces can be captured with the foam material and bound.

### Citation List

### Patent Documents

Patent Document 1: JP2010-069973 A
Patent Document 2: JP2011-168270 A

The document US5806802 relates to apparatus and methods for extending or otherwise modifying the useful operational lifetime of satellites which perform communications, weather reconnaissance, space reconnaissance and similar functions

The document US2012076629 relates to methods and apparatuses for non-cooperatively capturing objects in low or zero gravity environments as well as terrestrial environments.

### Summary

### Technical Problem

According to the techniques described in Patent Document 1 and Patent Document 2, however, they are configured to burn or collect just minute space debris or relatively small space debris, and are not suitable for the removal of relatively large space debris. For the removal of relatively large space debris, no such techniques of approaching debris as a target and of capturing the debris have been established, and there are still many problems, such as poor cost-efficiency. Especially since relatively large space debris have various shapes, sizes, positions of the gravity center and the like and often rotate, it is difficult to capture the debris, and so there is a problem of difficulty in capturing them and reducing the circling speed to let them enter the atmosphere. In this way, no effective means to solve these problems has been found.

In view of these circumstances, the present invention aims to provide a debris removal device and a debris removal system capable of removing space debris effectively without requiring difficult work of stopping the rotation of space debris of a relatively large size.

### Solution to Problem

In order to fulfill the aim, a debris removal device according to the preset invention as defined in claim 1 is presented to remove space debris circling around a predetermined orbit about the earth. The device includes: a body part; an adhesion part to let the space debris adhere to the body part; a braking part to generate braking force in a specific direction so as to act on the space debris adhering to the body part via the adhesion part during circling of the body part around the orbit together with the space debris; and a timing control part to control generation timing of the braking force. The timing control part generates the braking force, during circling of the body part together with the space debris around the orbit, when the body part is located at a specific region on the orbit where a direction of the braking force is (i) substantially parallel to an orbit plane (circling orbit plane) including the orbit and (ii) substantially parallel to a tangential line of the orbit, and (iii) in substantially an opposite direction of a circling direction of the space debris.

With this configuration, space debris is allowed to adhere to the body part via the adhesion part. Then, during circling of the body part together with the space debris around the predetermined orbit about the earth, when the body part is located at a "specific region" on the orbit where a direction of the braking force is (i) substantially parallel to an orbit plane and (ii) substantially parallel to a tangential line of the orbit, and (iii) in substantially an opposite direction of a circling direction of the space debris, the braking force is generated, and this braking force is allowed to act on the space debris. In this way, the braking force is generated when the direction of the braking force is parallel to the predetermined orbit plane and to the tangential line of the orbit, and is in substantially the opposite direction of the circling direction of the space debris, whereby the circling speed of the space debris can be decreased effectively so as to allow the space debris to enter the atmosphere for burning and removal. Herein, the braking force is generated in the direction of passing through the gravity center of the rigid body that is the combination of the space debris and the debris removal device, whereby further rotation of the rigid body can be prevented. Braking force may be generated once after the debris removal device adheres to the space debris so as to check whether the direction of the braking force passes through the gravity center or not.

The debris removal device according to the present invention further may include a direction control part configured to, when the direction of the braking force is not in a direction of passing through gravity center of a rigid body that is combination of the space debris and the debris removal device, change the direction of the braking force so that the direction of the braking force is in the direction of passing through the gravity center.

With this configuration, if the direction of the braking force does not pass through the gravity center of the rigid body (rigid-body gravity center) that is the combination the space debris and the debris removal device, the direction control part can control the direction of the braking force so that the direction of the braking force passes through the rigid-body gravity center. If the direction of the braking force does not pass through the rigid-body gravity center, moment will act on the rigid body and the rigid body will start another rotation. On the contrary, when the direction control part controls the direction of the braking force so that the direction of the braking force passes through the rigid-body gravity center, then the generation of such another rotating force on the rigid body can be prevented.

In the debris removal device according to the present invention, the braking part may include a plurality of thrusters that are disposed at at least one face of the body part in a dispersed manner. Preferably thrusters that burn individually with solid fuel are used for the plurality of thrusters. In order to increase the frequency of generation of braking force, a part of the plurality of thrusters can burn.

With this configuration, the braking part includes the plurality of thrusters disposed on the face of the body part in a dispersed manner. Since these thrusters burn individually, the braking force can be generated a plurality of times. Further, each of the thrusters includes solid fuel with low toxicity, and so they can be loaded on various types of cosmonautic vehicles, such as a rocket.

In the debris removal device according to the present invention, the adhesion part may include a disk part attached to the body part, and an adhesive layer disposed on a surface of the disk part. In such a case, the adhesive layer may include adhesive or glue and an impact buffer member.

With this configuration, the adhesion part has the adhesive layer disposed on the surface of the disk part that is attached to the body part, and the adhesive layer includes silicone adhesive (glue) and an impact buffer member, and therefore the debris removal device can adhere to the space debris favorably.

In the debris removal device according to the present invention, the timing control part may be loaded at the body part.

With this configuration, since the body part includes the timing control part, there is no need to provide facility for timing control on earth separately, and so the cost for the facility can be saved.

In the debris removal device according to the present invention, the timing control part may include a signal generation/transmission part configured to generate and transmit a control signal to control the braking part so that the braking force is generated when the body part is located at the specific region, and a signal reception/control part configured to receive a control signal transmitted from the signal generation/transmission part to control the braking part. In such a case, the signal generation/transmission part may be disposed on earth, and the signal reception/control part may be loaded at the body part.

With this configuration, the signal reception/control part of the body part can receive a control signal transmitted from the signal generation/transmission part on earth to control the braking part. Therefore there is no need to provide the body part with a large-sized arithmetic circuit, and so the body part can be made smaller and more lightweight.

A debris removal system according to a further embodiment of the present invention includes: the debris removal device as stated above, and a mother unit that can carry the debris removal device and is configured to release the debris removal device into the space.

With this configuration, the mother unit is moved relatively close to space debris (e.g., the position of a few meters from the space debris), and then the debris removal device can be released from the mother unit so as to adhere to the space debris.

The debris removal system according to the present invention may further include a guide part configured to guide the debris removal device released from the mother unit to the space debris until the body part of the debris removal device adheres to the space debris. Alternatively, the debris removal device may be configured to move to the space debris autonomously after being released from the mother unit.

With this configuration, the debris removal device released from the mother unit can be guided to space debris with the guide part, or the debris removal device can move there autonomously, whereby the body part of the debris removal device can adhere to the space debris.

In the debris removal system according to the present invention, the guide part may be disposed at the mother unit or on earth, and the debris removal device may include a reception part to receive a guide signal from the guide part.

With this configuration, the debris removal device can be guided remotely by the guide part installed at the mother unit or on earth, and therefore there is no need to provide the debris removal device with a guide part. This can make the debris removal device smaller and more lightweight.

### Advantageous Effects of Invention

The present invention can provide a debris removal device and a debris removal system capable of removing space debris effectively without requiring difficult work of stopping the rotation of space debris of a relatively large size.

### Brief Description of Drawings

Fig. 1 describes the configuration of a debris removal system according to one embodiment of the present invention.
Fig. 2 is a perspective view of the debris removal device according to one embodiment of the present invention (viewed from the adhesion part).
Fig. 3 is a perspective view of the debris removal device according to one embodiment of the present invention (viewed from the braking part).
Fig. 4 is a side view of the debris removal device according to one embodiment of the present invention.
Fig. 5 is a front view of the debris removal device according to one embodiment of the present invention (viewed from the adhesion part).
Fig. 6 is a rear view of the debris removal device according to one embodiment of the present invention (viewed from the braking part).
Fig. 7 describes the direction or the like of a braking force generated by the braking part of the debris removal device according to one embodiment of the present invention.
Fig. 8 describes the posture or the like of space debris during circling.
Fig. 9 describes a region where the braking force is to be generated by the braking part of the debris removal device according to one embodiment of the present invention.
Fig. 10 is a perspective view of the debris removal device according to another embodiment of the present invention (viewed from the adhesion part).
Fig. 11 is a perspective view of the debris removal device according to another embodiment of the present invention (viewed from the braking part).

### Description of Embodiments

The following describes embodiments of the present invention, with reference to the drawings.

Firstly, the configuration of a debris removal system 1 according to the present invention is described.

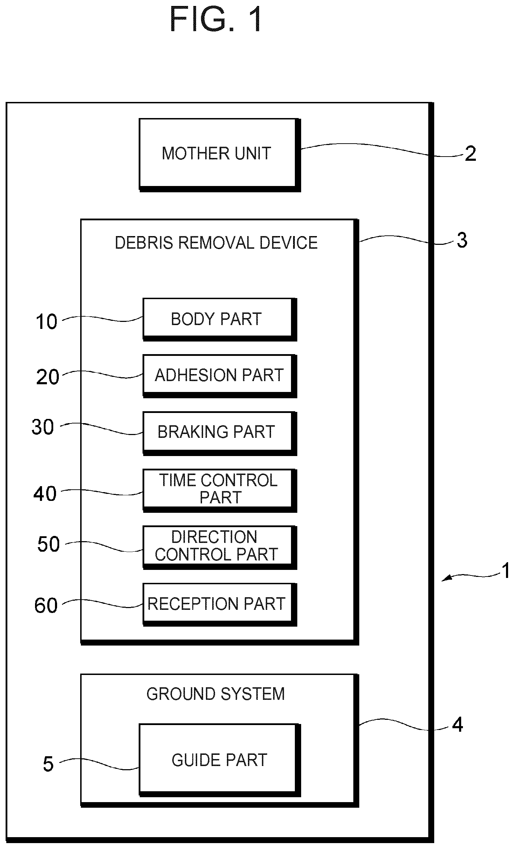

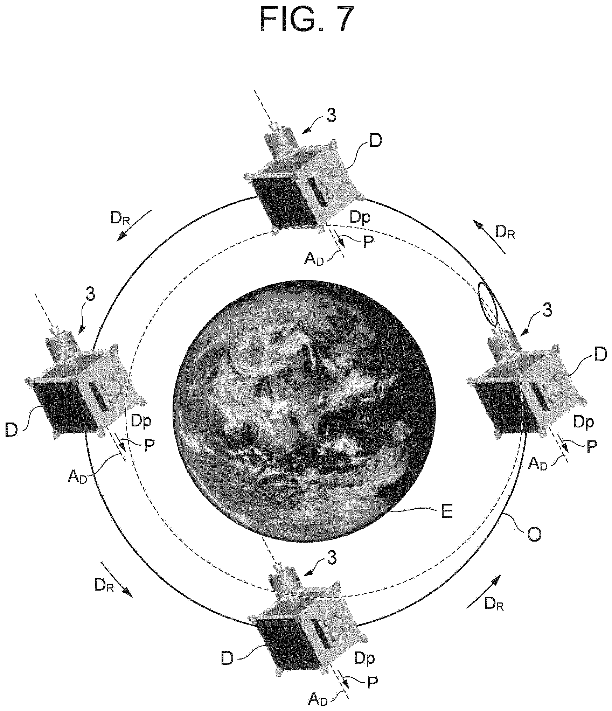

The debris removal system 1 is to remove space debris D (Fig. 7) circling around a predetermined orbit O about the earth E, and as shown in Fig. 1, it includes a mother unit 2, a debris removal device (slave unit) 3 that the mother unit 2 carries and releases in the space, and a ground system 4 to guide and control the mother unit 2 and the debris removal device 3.

The mother unit 2 is attached to a cosmonautic vehicle such as a rocket while carrying the debris removal device 3, and is configured to be launched into the space. The ground system 4 is disposed at a base station installed on earth, which is configured to receive sensor signals from the mother unit 2 and the debris removal device 3 or to transmit various command signals to the mother unit 2 and the debris removal device 3 via predetermined communication means. The ground system 4 includes a guide part 5 to guide the debris removal device 3 separated from the mother unit 2 to space debris D to let the debris removal device adhere to the space debris D. The guide part 5 may be provided at the mother unit 2.

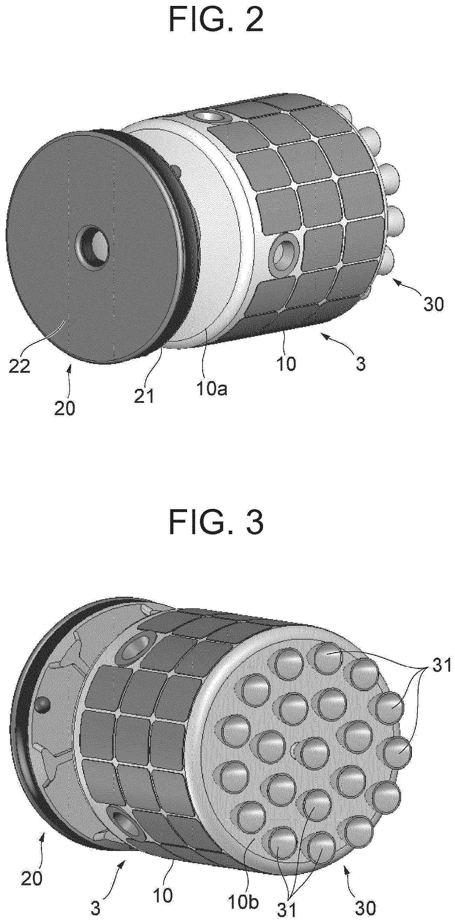

As shown in Figs. 2 to 6, the debris removal device 3 includes a body part 10, an adhesion part 20 to let space debris D adhere to the body part 10, a braking part 30 to generate braking force in a specific direction, a timing control part 40 to control the timing when the braking force is generated, a direction control part 50 to control the direction of the braking force, and a reception part 60 to receive a guide signal from the guide part 5.

As shown in Figs. 2 to 4, the body part 10 has a cylindrical shape, at one end face 10a of which the adhesion part 20 is attached via a shaft 11. At the other end face 10b of the body part 10, the braking part 30 is disposed. The body part 10 internally stores the timing control part 40 and the direction control part 50 made up of a computer or the like. The size of the body part 10 is set appropriately depending on the size of the cosmonautic vehicle and the mother unit 2 carrying the body part 10. The shape of the body part 10 is not limited to a cylindrical shape, which may be various shapes including a cubic shape, a rectangular parallelepiped shape, and a polyangular tubular shape.

As shown in Figs. 2 to 5, the adhesion part 20 includes a disk part 21 that is attached to the one end face 10a of the body part 10 via the shaft 11, and an adhesive layer 22 disposed on the surface of the disk part 21. In the present embodiment, the adhesive layer 22 is made up of silicone adhesive and an impact buffer member. Since the silicone adhesive has heat insulation property, heat transmitted from space debris D can be shielded. The adhesive making up the adhesive layer 22 is not limited to silicone adhesive, and other types of adhesive may be used. Instead of adhesive, glue may be used. A mechanical capturing unit may be provided together with adhesive or glue (or instead of adhesive or glue). The disk part 21 may be made of a metal material, and a foam material may be used as the impact buffer member.

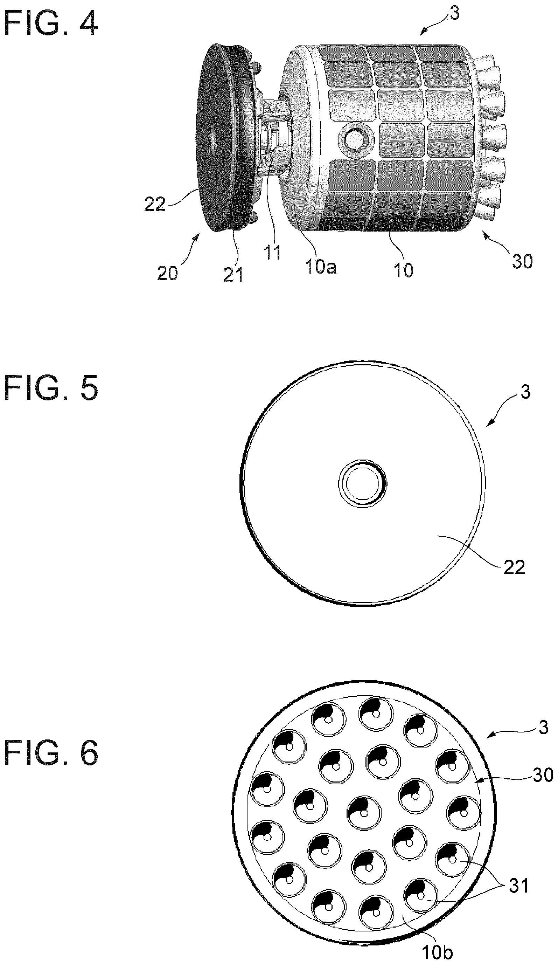

The braking part 30 is to generate braking force P in a specific direction D_{P} so as to act on the space debris D adhering to the body part 10 via the adhesion part 20 during circling of the body part 10 on an orbit O together with the space debris D. In the present embodiment, as shown in Figs. 3 and 6, the braking part 30 includes a plurality of (twenty-one) thrusters 31 disposed on the other end face 10b of the body part 10 in a dispersed manner. The thrusters 31 are configured so as to burn individually with solid fuel. The positions and the number of the thrusters 31 are not limited those illustrated in the present embodiment, and they may be set appropriately depending on the weight and the shape of the body part 10.

The braking part 30 in the present embodiment is configured so that the braking force P in the direction D_{P} as shown in Fig. 7 acts on the space debris D circling around the orbit O about the earth E in the circling direction D_{R}. The direction D_{P} of this braking force P depends on the position where the debris removal device 3 (body part 10) adheres to the space debris D. In the present embodiment, as shown in Fig. 7, the debris removal device 3 (body part 10) adheres to the space debris D on the extended line of the axis of rotation A_{D} of the space debris D, so that the direction D_{P} of the braking force P generated by the braking part 30 coincides with the extending direction of the axis of rotation A_{D} of the space debris D. With this configuration, even when the space debris D rotates during circling, the braking force P in a fixed direction can always act on the space debris D.

As shown in Fig. 7, the timing control part 40 controls the timing when the braking force P by the braking part 30 is generated so that the braking force P is generated, during circling of the debris removal device 3 together with the space debris D around the orbit O, when the debris removal device 3 is located at a specific region R on the orbit O where the direction D_{P} of the braking force P is (i) substantially parallel to the orbit plane (circling orbit plane) including the orbit O and (ii) substantially parallel to the tangential line N of the orbit O, and (iii) is in substantially the opposite direction of the circling direction D_{R} of the space debris D.

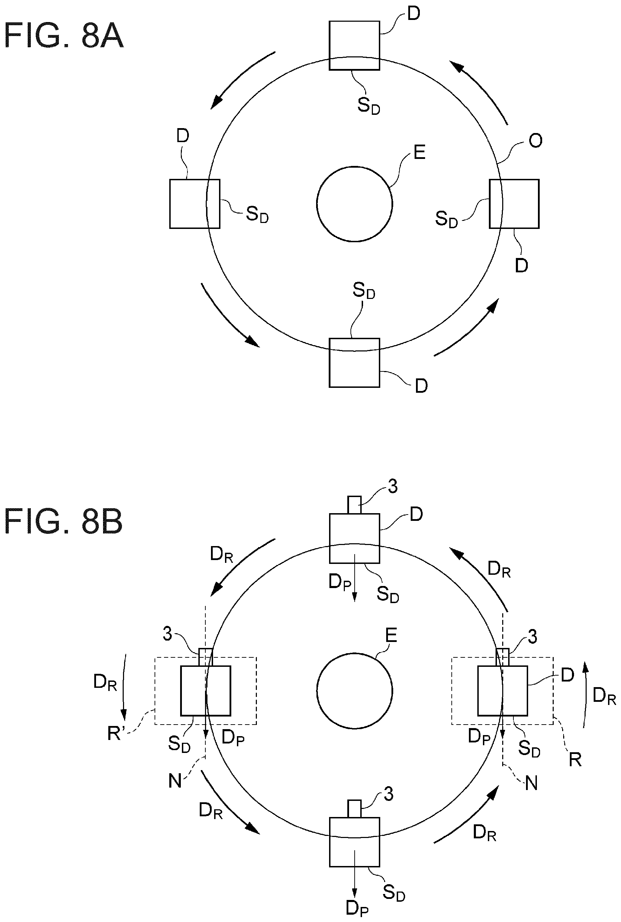

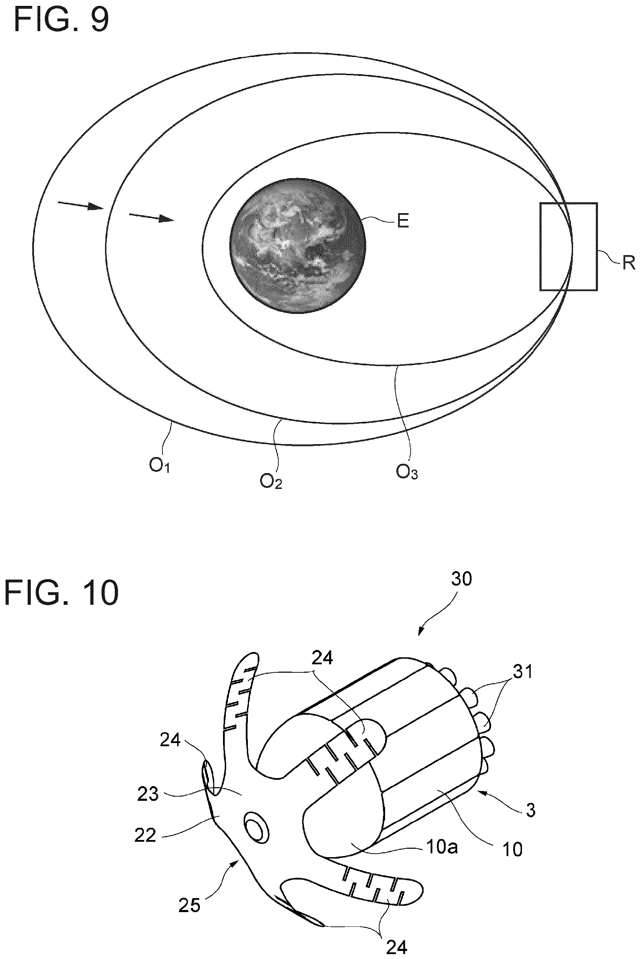

Referring to Figs. 8 and 9, the following describes the reason why the timing control part 40 sets the timing when the braking force P is generated as stated above.

It is known that space debris D that circles around a predetermined orbit O about the earth E and does not have a posture-control function does not circle around so as to always direct a specific plane S_{D} to the center as shown in Fig. 8(A), but the posture thereof changes because of a plurality of disturbances. That is, it is known that a mode of changing the posture and a mode of the rotation of the space debris D are determined based on one or more factors including (1) gravity gradient that occurs if the space debris D is not a true circle, (2) solar irradiation, (3) air resistance, (4) earth magnetism, and (5) other reasons.

In this way, since the space debris D circles about the earth E while changing the posture due to various factors, when the debris removal device 3 adheres to the space debris D at the position and with the posture as shown in Fig. 8(B), for example, there are two regions where the direction Dp of the braking force P generated by the braking part 30 becomes parallel to the tangential line N of the orbit O (region R and region R'). The present inventor found that, when the braking force P is generated at the region (specific region) R between these two regions R and R' where the direction D_{P} of the braking force P is in the opposite direction of the circling direction D_{R} of the space debris D, the circling speed (energy) of the space debris can be decreased the most effectively. Herein assume that the direction D_{P} of the braking force P is located in the orbit plane including the orbit O of the space debris D (the direction D_{P} of the braking force P is at least parallel to the orbit plane).

Such braking force P generated at the specific region R leads to a decrease in the circling speed of the space debris D, and as a result, the orbit of the space debris D will shift to the orbit O₂ close to the earth E from the original orbit O₁ as shown in Fig. 9. Braking force P is generated at the specific region R in the orbit O₂ after the shifting as well, whereby the circling speed of the space debris can be decreased and so the orbit can shift to the orbit O₃ closer to the earth E. Repeating this, the space debris D can enter the atmosphere finally for burning and removal.

In the present embodiment, considering the case where the direction D_{P} of the braking force P may not pass through the gravity center of the rigid body that is the combination of the space debris D and the debris removal device 3 (rigid-body gravity center), the body part 10 includes the direction control part 50 to change the direction of the braking force P. If the direction D_{P} of the braking force P does not pass through the rigid-body gravity center, the direction control part 50 activates a specific thruster 31 of the braking part 30 to change the direction of the braking force P so that the direction D_{P} of the braking force P passes through the rigid-body gravity center. Braking force P may be generated once on a trial basis after the debris removal device 3 adheres to the space debris D so as to check whether the direction of the braking force P passes through the rigid-body gravity center or not.

Next, the following describes a method for removing space debris D using the debris removal system 1 according to the present embodiment.

Firstly, a cosmonautic vehicle carrying the mother unit 2 and the debris removal device 3 is launched, and the mother unit 2 is moved close to space debris D circling around an orbit O about the earth E (mother unit guide step: S1). In the mother unit guide step S1, the mother unit 2 may be moved relatively close (e.g., the position of a few kilometers from the space debris D) to the space debris D by GPS navigation, for example, the mother unit 2 may be brought close to the space debris D at a position of a few tens to hundreds of meters from the space debris using a star tracker or the like, and then the mother unit 2 may be brought closer to the position of a few meters by an optic camera or the like.

Next, the debris removal device 3 is released from the mother unit 2, and the debris removal device 3 is guided to the space debris D to adhere to the space debris D (device adhesion step: S2). In the device adhesion step S2, the debris removal device 3 receives a guide signal transmitted from the guide part 5 of the ground system 4 at the reception part 60, and moves close to the space debris D in accordance with the received guide signal and adheres to the space debris D at a specific position (on the extended line of the axis of rotation A_{D} of the space debris D) so that the direction D_{P} of the braking force P generated by the braking part 30 coincides with the extending direction of the axis of rotation A_{D} of the space debris D.

Subsequently, the timing control part 40 of the debris removal device 3 monitors the position of the debris removal device 3 and the space debris D circling around, and controls to generate braking force P when the debris removal device 3 is located at a specific region R (braking step: S3). Repeating the braking step S3 as needed, the circling speed of the space debris D can be decreased effectively, whereby the space debris D can enter the atmosphere finally for burning and removal.

In the debris removal device 3 according to the embodiment as stated above, the body part 10 can adhere to the space debris D via the adhesion part 20. Then, the braking force P is generated, during circling of the body part 10 together with the space debris D on the predetermined orbit O about the earth E, when the body part 10 is located at the "specific region R" on the orbit O where the direction D_{P} of the braking force P is (i) substantially parallel to the orbit plane (circling orbit plane) including the orbit O and (ii) substantially parallel to the tangential line N of the orbit O, and is (iii) in substantially the opposite direction of the circling direction D_{R} of the space debris, and this braking force P is allowed to act on the space debris D. In this way, the braking force P is generated when the direction D_{P} of the braking force P is parallel to the predetermined orbit plane and to the tangential line N of the orbit O, and is in substantially the opposite direction of the circling-around direction D_{R} of the space debris D, whereby the circling speed of the space debris D can be decreased effectively so as to allow the space debris D to enter the atmosphere for burning and removal.

In the debris removal device 3 according to the embodiment as stated above, if the direction D_{P} of the braking force P does not pass through the gravity center of the rigid body that is the combination the space debris D and the debris removal device 3 (rigid-body gravity center), the direction control part 50 can control the direction D_{P} of the braking force P so that the direction D_{P} of the braking force P passes through the rigid-body gravity center. If the direction D_{P} of the braking force P does not pass through the rigid-body gravity center, moment will act on the rigid body and the rigid body will start another rotation. On the contrary, when the direction control part controls the direction D_{P} of the braking force P so that the direction D_{P} of the braking force P passes through the rigid-body gravity center, then the generation of such another rotating force on the rigid body can be prevented.

In the debris removal device 3 according to the embodiment as stated above, the braking part 30 includes the plurality of thrusters 31 disposed on the end face 10b of the body part 10 in a dispersed manner. Since these thrusters 31 burn individually, the braking force P can be generated a plurality of times. Further, each of the thrusters 31 includes solid fuel with low toxicity, and so they can be loaded on various types of cosmonautic vehicles, such as a rocket.

In the debris removal device 3 according to the embodiment as stated above, the adhesion part 20 has the adhesive layer 22 disposed on the surface of the disk part 21 that is attached to the body part 10, and the adhesive layer 22 includes silicone adhesive and an impact buffer member, and therefore the debris removal device can adhere to the space debris D favorably.

In the debris removal device 3 according to the embodiment as stated above, since the body part 10 includes the timing control part 40, there is no need to provide facility for timing control on earth separately, and so the cost for the facility can be saved.

In the debris removal system 1 according to the embodiment as stated above, since the debris removal system includes the debris removal device 3 that includes the body part 10 or the like and the mother unit 2 that can carry the debris removal device 3 and is configured to release the debris removal device 3 into the space, the mother unit 2 is moved relatively close to space debris D (e.g., the position of a few kilometers from the space debris D), and then the debris removal device 3 can be released from the mother unit 2 so as to adhere to the space debris D.

In the debris removal system 1 according to the embodiment as stated above, the debris removal device 3 can be guided remotely by the guide part 5 installed on earth, and therefore there is no need to provide the debris removal device 3 with a guide part. This can make the debris removal device 3 smaller and more lightweight.

The above embodiment shows the example where the body part 10 of the debris removal device 3 includes the timing control part 40 and the direction control part 50. In another example, a control signal to control the generation timing of braking force P and a control signal to change the posture of the body part 10 may be generated on earth or at the mother unit 2, and these control signals may be transmitted to the debris removal device 3 to control the braking part 30.

For instance, a signal generation/transmission part may be disposed on earth or at the mother unit 2, which is to generate a control signal to control the braking part 30 so that braking force P is generated when the debris removal device 3 is located at the specific region R or to generate a control signal to control the direction D_{P} of the braking force P so that the direction D_{P} of the braking force P passes through the rigid-body gravity center. In such a case, the debris removal device 3 (body part 10) may include a signal reception/control part, which is to receive a control signal transmitted from the signal generation/transmission part to control the braking part 30.

With this configuration, the signal reception/control part of the body part 10 can receive a control signal transmitted from the signal generation/transmission part on earth or at the mother unit 2 to control the braking part 30. Therefore there is no need to provide the debris removal device 3 with a large-sized arithmetic circuit, and so the debris removal device 3 can be made smaller and more lightweight.

The above embodiment shows the example where the debris removal device 3 released from the mother unit 2 is guided to the space debris D by the guide part 5 until the body part 10 of the debris removal device 3 adheres to the space debris D. In another example, the debris removal device 3 may include a mechanism to move to the space debris D autonomously after being released from the mother unit 2. Without using the guide part 5 or the autonomous movement mechanism, the debris removal device 3 may be simply released from the mother unit 2 so as to adhere to the space debris D.

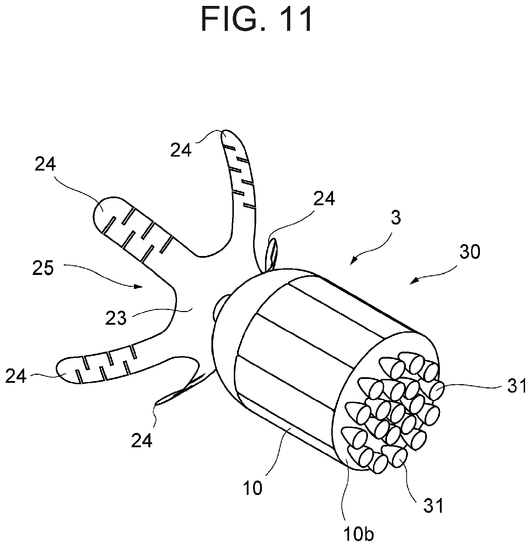

In the debris removal device 3 according to the embodiment as stated above, the adhesion part 20 having the disk part 21 is shown as one example, and the shape and the configuration of the adhesion part are not limited to this. For instance, as shown in Figs. 10 and 11, a starfish-shaped member 25 having a center part 23 of a predetermined area and a plurality of (e.g., five) legs 24 extending from the center part 23 radially with a predetermined width and by a predetermined length may be used instead of the disk part 21, and the adhesive layer 22 including adhesive and an impact buffer member may be disposed on the surface of the member 25. The starfish-shaped member 25 may be made of a metal material, for example, and the shape of the starfish-shaped member 25 may be changed freely with wire or the like.

The present invention is not limited to the embodiments as stated above, and design modifications to these embodiments, which will be made by a person skilled in the art as appropriate, are also included in the scope of the present invention as long as they have the features of the present invention, which is defined by the appended claims. That is, each element in the above embodiments and the arrangement, materials, conditions, shapes, dimensions, etc., thereof are not limited to those described above and may be modified as appropriate.

### Reference Signs List

- 1: Debris removal system

- 2: Mother unit
- 3: Debris removal device
- 5: Guide part
- 10: Body part
- 10b: End face
- 20: Adhesion part
- 21: Disk part
- 22: Adhesive layer
- 30: Braking part
- 31: Thruster
- 40: Timing control part
- 50: Direction control part
- 60: Reception part
- D: Space debris
- D_{P}: Direction of braking force
- D_{R}: Circling direction of space debris
- E: Earth
- N: tangential line of orbit
- O: Orbit
- P: Braking force
- R: Specific region

## Claims

1. A debris removal device (3) that is configured to remove space debris circling around a predetermined orbit about the earth, comprising:
a body part (10) having two end faces;
an adhesion part (20) to let the space debris adhere to the body part (10), wherein the adhesion part is attached to one end face (10a) of the body part (10);
a braking part (30) disposed at the other end face (10b) of the body part (10) and configured to generate braking force in a specific direction so as to act on the space debris adhering to the body part via the adhesion part during circling of the body part around the orbit together with the space debris; and
a timing control part (40) to control generation timing of the braking force,
wherein in use the timing control part (40) generates the braking force, during circling of the body part together with the space debris around the orbit, when the body part is located at a specific region on the orbit where a direction of the braking force is (i) substantially parallel to an orbit plane including the orbit and (ii) substantially parallel to a tangential line of the orbit, and (iii) in substantially an opposite direction of a circling direction of the space debris.

2. The debris removal device (3) according to claim 1, further comprising a direction control part (50) configured to, when the direction of the braking force is not in a direction of passing through gravity center of a rigid body that is combination of the space debris and the debris removal device (3), change the direction of the braking force so that the direction of the braking force is in the direction of passing through the gravity center.

3. The debris removal device (3) according to claim 1 or 2, wherein the body part (10) includes at least one face, the braking part (30) includes a plurality of thrusters that are disposed at the face of the body part in a dispersed manner, and the plurality of thrusters are configured to burn individually with solid fuel.

4. The debris removal device (3) according to any one of claims 1 to 3, wherein the adhesion part (20) includes a disk part (21) attached to the body part (10), and an adhesive layer disposed on a surface of the disk part (21), and the adhesive layer includes adhesive or glue and an impact buffer member.

5. The debris removal device (3) according to any one of claims 1 to 4, wherein the timing control part is loaded at the body part.

6. The debris removal device (3) according to any one of claims 1 to 4, wherein the timing control part (40) includes: a signal generation/transmission part configured to generate and transmit a control signal to control the braking part (30) so that the braking force is generated when the body part (10) is located at the specific region; and a signal reception/control part configured to receive a control signal transmitted from the signal generation/transmission part to control the braking part,
wherein the signal generation/transmission part is disposed on earth, and
wherein the signal reception/control part is loaded at the body part.

7. A debris removal system comprising:
the debris removal device (3) according to any one of claims 1 to 6; and
a mother unit (2) that can carry the debris removal device and is configured to release the debris removal device into the space.

8. The debris removal system according to claim 7, further comprising a guide part (5) configured to guide the debris removal device (3) released from the mother unit (2) to the space debris until the body part (10) of the debris removal device adheres to the space debris.

9. The debris removal system according to claim 8, wherein the guide part (5) is disposed at the mother unit (2) or on earth, and
wherein the debris removal device includes a reception part (60) to receive a guide signal from the guide part.

10. The debris removal system according to claim 7, wherein the debris removal device (3) is configured to move to the space debris autonomously after being released from the mother unit (2).

## Patentansprüche

1. Schrottentfernungsvorrichtung (3), welche dazu eingerichtet ist, Weltraumschrott zu entfernen, welcher einen vorbestimmten Orbit um die Erde umkreist, umfassend:
einen Körperteil (10), welcher zwei Endflächen aufweist;
einen Haftteil (20), um den Weltraumschrott an dem Körperteil (10) haften zu lassen;
wobei der Haftteil an einer Endfläche (10a) des Körperteils (10) angebracht ist;
einen Bremsteil (30), welcher an der anderen Endfläche (10b) des Körperteils (10) angeordnet ist und dazu eingerichtet ist, eine Bremskraft in einer spezifischen Richtung zu erzeugen, um auf den Weltraumschrott, welcher an dem Körperteil über den Haftteil haftet einzuwirken, während der Körperteil zusammen mit dem Weltraumschrott den Orbit umkreist; und
einen Timing-Steuerungsteil (40), um ein Timing einer Erzeugung der Bremskraft zu steuern,
wobei, bei Verwendung, der Timing-Steuerungsteil (40) die Bremskraft erzeugt, während der Körperteil zusammen mit dem Weltraumschrott den Orbit umkreist, wenn der Körperteil in einem spezifischen Bereich auf dem Orbit angeordnet ist, in welchem eine Richtung der Bremskraft (i) im Wesentlichen parallel zu einer Orbit-Ebene ist, welche den Orbit umfasst, und (ii) im Wesentlichen parallel zu einer tangentialen Linie des Orbit ist und (iii) im Wesentlichen eine entgegengesetzte Richtung einer Umkreisungsrichtung des Weltraumschrotts ist.

2. Schrottentfernungsvorrichtung (3) nach Anspruch 1, ferner umfassend einen Richtungssteuerungsteil (50), welcher dazu eingerichtet ist, wenn die Richtung der Bremskraft nicht in einer Richtung liegt, welche durch einen Schwerpunkt eines starren Körpers verläuft, welcher eine Kombination des Weltraumschrotts und der Schrottentfernungsvorrichtung (3) ist, die Richtung der Bremskraft zu ändern, so dass die Richtung der Bremskraft in der Richtung liegt, welche durch den Schwerpunkt verläuft.

3. Schrottentfernungsvorrichtung (3) nach Anspruch 1 oder 2, wobei der Körperteil (10) wenigstens eine Fläche umfasst, wobei der Bremsteil (30) eine Mehrzahl von Schubeinrichtungen umfasst, welche an der Fläche des Körperteils in einer verteilten Weise angeordnet sind, und die Mehrzahl von Schubeinrichtungen dazu eingerichtet sind, individuell mit Festbrennstoff gefeuert zu werden.

4. Schrottentfernungsvorrichtung (3) nach einem der Ansprüche 1 bis 3, wobei der Haftteil (20) einen Scheibenteil (21), welcher an dem Körperteil (10) angebracht ist, und eine Haftschicht umfasst, welche an einer Fläche des Scheibenteils (21) angeordnet ist, und die Haftschicht ein Haftmittel oder einen Klebstoff und ein Aufprallpufferelement umfasst.

5. Schrottentfernungsvorrichtung (3) nach einem der Ansprüche 1 bis 4, wobei der Timing-Steuerungsteil auf den Körperteil geladen ist.

6. Schrottentfernungsvorrichtung (3) nach einem der Ansprüche 1 bis 4, wobei der Timing-Steuerungsteil (40) umfasst: einen Signal-Erzeugungs/Übertragungsteil, welche dazu eingerichtet ist, ein Steuerungssignal zu erzeugen und zu übertragen, um den Bremsteil (30) zu steuern, sodass die Bremskraft erzeugt wird, wenn der Körperteil (10) in dem spezifischen Bereich angeordnet ist; und einen Signal-Empfangs/Steuerungsteil, welcher dazu eingerichtet ist, ein Steuerungssignal zu empfangen, welches von dem Signal-Erzeugungs/Übertragungsteil übertragen worden ist, um den Bremsteil zu steuern
wobei der Signal-Erzeugungs/Übertragungsteil auf der Erde angeordnet ist, und
wobei der Signal-Empfangs/Steuerungsteil auf den Körperteil geladen ist.

7. Schrottentfernungssystem, umfassend:
die Schrottentfernungsvorrichtung (3) nach einem der Ansprüche 1 bis 6; und
eine Muttereinheit (2), welche die Schrottentfernungsvorrichtung tragen kann und dazu eingerichtet ist, die Schrottentfernungsvorrichtung in den Weltraum freizugeben.

8. Schrottentfernungssystem nach Anspruch 7, ferner umfassend einen Führungsteil (5), welcher dazu eingerichtet ist, dass Schrottentfernungssystem (3), welches von der Muttereinheit (2) freigegeben worden ist, zu dem Weltraumschrott zu führen, bis der Körperteil (10) der Schrottentfernungsvorrichtung an dem Weltraumschrott haftet.

9. Schrottentfernungssystem nach Anspruch 8, wobei der Führungsteil (5) an der Muttereinheit (2) oder auf der Erde angeordnet ist, und
wobei die Schrottentfernungsvorrichtung einen Empfangsteil (60) umfasst, um ein Führungssignal von dem Führungsteil zu empfangen.

10. Schrottentfernungssystem nach Anspruch 7, wobei die Schrottentfernungsvorrichtung (3) dazu eingerichtet ist, den Weltraumschrott autonom zu bewegen, nachdem es von der Muttereinheit (2) freigegeben worden ist.

## Revendications

1. Dispositif d'enlèvement de débris (3) qui est configuré pour enlever des débris spatiaux circulant sur une orbite prédéterminée autour de la Terre, comprenant :
une partie corps (10) présentant deux faces d'extrémité ;
une partie d'adhérence (20) pour faire adhérer les débris spatiaux à la partie corps (10), la partie d'adhérence étant fixée à une face d'extrémité (10a) de la partie corps (10) ;
une partie de freinage (30) disposée au niveau de l'autre face d'extrémité (10b) de la partie corps (10) et configurée pour générer une force de freinage dans une direction spécifique de manière à agir sur les débris spatiaux adhérant à la partie corps via la partie d'adhérence pendant que la partie corps circule sur l'orbite avec les débris spatiaux ; et
une partie de commande de séquencement (40) pour commander un séquencement de génération de la force de freinage, dans lequel, en utilisation, la partie de commande de séquencement (40) génère la force de freinage, pendant que la partie corps circule sur l'orbite avec les débris spatiaux, lorsque la partie corps est située au niveau d'une région spécifique sur l'orbite où une direction de la force de freinage est (i) sensiblement parallèle à un plan orbital incluant l'orbite et (ii) sensiblement parallèle à une ligne tangentielle de l'orbite, et (iii) sensiblement dans une direction opposée à une direction de circulation des débris spatiaux.

2. Dispositif d'enlèvement de débris (3) selon la revendication 1, comprenant en outre une partie de commande de direction (50) configurée pour, lorsque la direction de la force de freinage n'est pas dans une direction passant par le centre de gravité d'un corps rigide qui est une combinaison des débris spatiaux et du dispositif d'enlèvement de débris (3), changer la direction de la force de freinage de telle sorte que la direction de la force de freinage soit dans la direction passant par le centre de gravité.

3. Dispositif d'enlèvement de débris (3) selon la revendication 1 ou 2, dans lequel la partie corps (10) comporte au moins une face, la partie de freinage (30) comporte une pluralité de propulseurs qui sont disposés au niveau de la face de la partie corps d'une manière dispersée, et la pluralité de propulseurs sont configurés pour brûler individuellement avec du combustible solide.

4. Dispositif d'enlèvement de débris (3) selon l'une quelconque des revendications 1 à 3, dans lequel la partie d'adhérence (20) inclut une partie disque (21) fixée à la partie corps (10), et une couche adhésive disposée sur une surface de la partie disque (21), et la couche adhésive comporte un adhésif ou de la colle et un élément absorbeur d'impact.

5. Dispositif d'enlèvement de débris (3) selon l'une quelconque des revendications 1 à 4, dans lequel la partie de commande de séquencement est chargée au niveau de la partie corps.

6. Dispositif d'enlèvement de débris (3) selon l'une quelconque des revendications 1 à 4, dans lequel la partie de commande de séquencement (40) inclut : une partie de génération/transmission de signal configurée pour générer et transmettre un signal de commande pour commander la partie de freinage (30) de telle sorte que la force de freinage soit générée lorsque la partie corps (10) est située au niveau de la région spécifique ; et une partie de réception/commande de signal configurée pour recevoir un signal de commande transmis depuis la partie de génération/transmission de signal pour commander la partie de freinage,
dans lequel la partie de génération/transmission de signal est disposée sur la Terre, et
dans lequel la partie de réception/commande de signal est chargée au niveau de la partie corps.

7. Système d'enlèvement de débris comprenant :
le dispositif d'enlèvement de débris (3) selon l'une quelconque des revendications 1 à 6 ; et
une unité mère (2) qui peut transporter le dispositif d'enlèvement de débris et est configurée pour larguer le dispositif d'enlèvement de débris dans l'espace.

8. Système d'enlèvement de débris selon la revendication 7, comprenant en outre une partie guide (5) configurée pour guider le dispositif d'enlèvement de débris (3) largué depuis l'unité mère (2) jusqu'aux débris spatiaux jusqu'à ce que la partie corps (10) du dispositif d'enlèvement de débris adhère aux débris spatiaux.

9. Système d'enlèvement de débris selon la revendication 8, dans lequel la partie guide (5) est disposée au niveau de l'unité mère (2) ou sur la Terre, et
dans lequel le dispositif d'enlèvement de débris comporte une partie de réception (60) pour recevoir un signal de guidage provenant de la partie guide.

10. Système d'enlèvement de débris selon la revendication 7, dans lequel le dispositif d'enlèvement de débris (3) est configuré pour se déplacer jusqu'aux débris spatiaux de manière autonome après avoir été largué depuis l'unité mère (2).
